# DEMANDE DE BREVET EUROPEEN

(11) **EP 0 868 845 A1**
(43) Date de publication de la demande: **07.10.1998**
(21) Numéro de dépôt: 98460007.2
(22) Date de dépôt: 30.03.1998
(51) Int. Cl.: A01K 1/02, A01K 1/00

(54) **Installation de cases adjacentes pour animaux, notamment de cases gestantes d'une porcherie**

(30) Priorité: 28.03.1997 FR 9704108
(71) Demandeur: I-TEK SA, F-22250 Tremeur (FR)
(72) Inventeur: Lesnard, Pierre, 22250 Tremeur (FR); Thul, Jean-Jacques, 22350 Yvignac (FR)
(74) Mandataire: Maillet, Alain

(57) **Abrégé**

La présente invention concerne une installation de cases adjacentes pour animaux, notamment de cases gestantes d'une porcherie.

L'installation de cases adjacentes (100₁ et 100₂) selon l'invention est du type où chaque case (100₁ ou 100₂) comporte un mécanisme de porte (102) prévu pour pouvoir occuper une position de fermeture de manière à empêcher la sortie de l'animal de ladite case (100₁ ou 100₂), deux cases adjacentes (100₁ et 100₂) étant séparées par une paroi latérale commune (106, 110).

Cette installation est telle que chaque paroi latérale commune (106, 110) est pourvue d'un moyen (123) pour verrouiller dans ladite position de fermeture les mécanismes de porte (102) desdites deux cases adjacentes (100₁ et 100₂) à ladite paroi (106, 110).

## Description

La présente invention concerne une installation de cases adjacentes pour animaux, notamment de cases gestantes d'une porcherie.

Dans les élevages en porcherie, chaque truie en gestation est logée dans une case qui est constituée de deux éléments de construction constituant respectivement les parois latérales de ladite case. A l'avant desdites deux parois est fixée une auge qui permet à la truie de s'alimenter. A l'arrière desdites parois est fixé un mécanisme de porte qui, lorsqu'il est actionné en position d'ouverture, permet à la truie de pénétrer dans la case et, lorsqu'il est actionné en position de fermeture, permet de maintenir ladite truie dans ladite case.

Dans une porcherie, les cases gestantes sont usuellement disposées de manière adjacentes les unes aux autres, formant ainsi des rangées de cases qui sont telles que chaque élément de construction précité fait office de paroi latérale commune pour deux cases qui sont adjacentes.

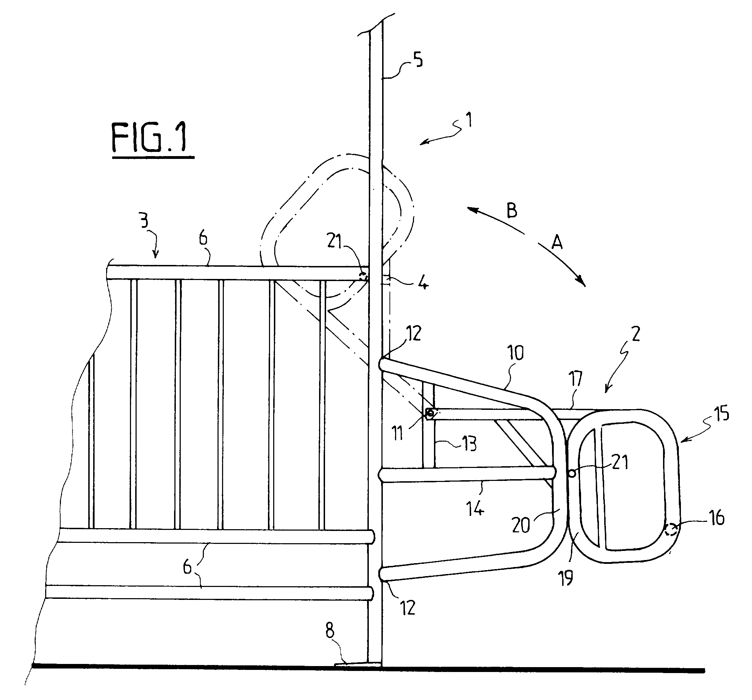

On a représenté en vue latérale à la Fig. 1 une case gestante 1 pourvue d'un mécanisme de porte basculante 2 du type connu.

Sur cette Fig. 1, on voit un élément de construction 3 formant l'une des parois latérales de la case 1, l'élément 3 formant la paroi latérale opposée (non visible à la Fig. 1) étant relié au précédent par des traverses 4 (une seule est représentée). Chaque élément de construction 3 est essentiellement constitué de deux montants 5 (un seul est représenté) qui sont reliés entre eux par des tubes longitudinaux 6, lesquels tubes 6 sont par exemple reliés entre eux par des barreaux 7. Chaque montant 5 présente une patte 8 pour sa fixation au sol 9.

Une auge (non représentée) est disposée dans la partie avant de la case 1 qui est prévue pour recevoir l'avant d'une truie.

Un arceau 10 prévu pour recevoir un point latéral de pivotement 11 du mécanisme de porte 2 est fixé par ses deux extrémités 12 sur le montant arrière 5 de chaque élément de construction 3, ceci dans le prolongement dudit élément 3. Le mécanisme de porte 2 de la case 1 est ainsi caractérisé par un axe horizontal de pivotement joignant deux points latéraux 11, ledit axe étant transversal par rapport à la case 1. Dans l'exemple de la Fig. 1, une tige 13 destinée à recevoir ledit point latéral de pivotement 11 est fixée à l'intérieur de l'arceau 10 par l'intermédiaire d'un tube-support 14 solidaire dudit arceau 10 et dudit montant 5. La tige 13 est par exemple fixée, d'une part, sur la partie supérieure de l'arceau 10 en l'une de ses extrémités et, d'autre part, sur le tube-support 14 en son autre extrémité.

Le mécanisme de porte 2 est constitué de deux battants 15 identiques (un seul est représenté) reliés entre eux par un tubage 16, et qui sont chacun reliés audit point latéral de pivotement 11 par l'intermédiaire d'un bras 17. En l'une de ses extrémités, chaque bras 17 est monté pivotant sur la tige 13 par l'intermédiaire dudit point de pivotement 11. En son autre extrémité, chaque bras 17 est fixé à la partie supérieure d'un battant 15.

Chacun des deux bras 17 d'un mécanisme de porte 2 présente une forme coudée à partir de son extrémité qui est montée sur le point de pivotement 11, de telle sorte que seule cette dernière extrémité soit dans le plan de l'arceau 10 (cette forme coudée n'est pas visible à la Fig. 1). De plus, un bras de support 18 est par exemple fixé entre chaque bras 17 et le bord proximal 19 de chaque battant 15, de manière que le bras 17, le bras de support 18 et ledit bord 19 soient coplanaires.

Du fait du tubage 16 qui les relie entre eux, les deux battants 15 d'une même case 1 peuvent occuper conjointement, d'une part, une position de fermeture où ils ferment au moins partiellement l'ouverture existant entre les sommets verticaux 20 respectifs des arceaux 10 par basculement de chaque bras 17 vers le bas (voir flèche A) et, d'autre part, une position d'ouverture (représentée en pointillés à la Fig. 1) où ils libèrent ladite ouverture par basculement de chaque bras 17 vers le haut (voir flèche B).

Comme on peut le voir à la Fig. 1, un moyen 21 de maintien du mécanisme 2 en position d'ouverture est prévu sur l'un au moins de chacun de ses battants 15. Ce moyen de maintien 21 peut être constitué d'une pointe en saillie sur le bord 19 d'un battant 15 et perpendiculairement au plan de celui-ci, laquelle est par exemple prévue pour coopérer avec un tube longitudinal 6 de la case 1.

Ce mécanisme de porte 2 permet un accès commode aux cases gestantes 1 d'une installation de porcherie. Cependant, se pose le problème des mouvements intempestifs de recul d'une truie dans la case 1 où elle se trouve, lesquels mouvements peuvent entraîner un soulèvement indésirable des bras 17 et, par conséquent, un basculement des battants 15 en position d'ouverture.

Le but de la présente invention est de proposer une installation de cases adjacentes pour animaux, notamment de cases gestantes d'une porcherie, du type où chaque case comporte un mécanisme de porte prévu pour pouvoir occuper une position de fermeture de manière à empêcher la sortie de l'animal de ladite case, deux cases adjacentes étant séparées par une paroi latérale commune, qui permette d'empêcher tout pivotement de son mécanisme de porte sous l'action d'une poussée de l'animal lorsque ledit mécanisme est en position de fermeture.

A cet effet, une installation selon l'invention est telle que chaque paroi latérale commune est pourvue d'un moyen pour verrouiller dans ladite position de fermeture les mécanismes de porte desdites deux cases adjacentes à ladite paroi.

Selon une autre caractéristique de l'invention, ladite installation est du type où chaque mécanisme de porte est prévu pour pouvoir pivoter autour d'un axe transversal par rapport à la case sur laquelle il est monté, et elle est telle que chaque moyen de verrouillage est prévu pour pouvoir occuper une position de verrouillage où il empêche simultanément le pivotement autour dudit axe desdits deux mécanismes de porte adjacents à la paroi commune.

Selon une autre caractéristique de l'invention, ladite installation est du type où lesdits deux mécanismes de porte sont respectivement montés sur ladite paroi commune par l'intermédiaire de bras montés de part et d'autre de ladite paroi de manière à être solidaires dudit axe de pivotement, les bras étant prévus pour faire passer chaque mécanisme de porte de ladite position de fermeture à une position d'ouverture en pivotant vers le haut autour dudit axe, et elle est telle que chaque moyen de verrouillage est monté de manière mobile en rotation sur un support solidaire de l'extrémité de ladite paroi commune qui est adjacente auxdits mécanismes de porte, de manière à pouvoir occuper, d'une part, une position de verrouillage où il bute sensiblement transversalement par rapport à ladite paroi contre lesdits bras qui lui sont adjacents en les surplombant et, d'autre part, une position de déverrouillage où il est sensiblement positionné dans le plan de ladite paroi de sorte à autoriser le pivotement vers le haut desdits bras.

Selon une autre caractéristique de l'invention, chaque moyen de verrouillage comporte en son centre un organe pour le bloquer en rotation sur ledit support.

Selon une autre caractéristique de l'invention, ledit organe est constitué d'une patte de section carrée, laquelle est prévue pour traverser avec jeu un premier orifice de section carrée qui est pratiqué sur une plaque supérieure dudit support.

Selon une autre caractéristique de l'invention, une tige est montée solidaire dudit organe de blocage de manière normale par rapport au plan contenant ledit moyen de verrouillage, ladite tige étant prévue pour traverser avec jeu un second orifice qui est pratiqué sur une plaque inférieure dudit support, de telle manière que ledit organe de blocage puisse être extrait du support par le guidage en translation de ladite tige au travers dudit support.

Selon une autre caractéristique de l'invention, chaque moyen de verrouillage est pourvu d'une poignée sur sa face opposée à ladite tige.

Selon une autre caractéristique de l'invention, chaque moyen de verrouillage est pourvu d'un moyen pour rappeler ladite patte dans ledit orifice supérieur.

Selon une autre caractéristique de l'invention, ledit moyen de rappel est constitué d'un ressort à compression qui est prévu pour prendre appui, d'une part, sous ladite plaque inférieure du support et, d'autre part, sur une butée basse dont est pourvue ladite tige.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 est une vue latérale d'une installation de cases selon l'art antérieur, chaque case étant pourvue d'un mécanisme de porte basculante,
la Fig. 2 est une vue partielle et en perspective d'une paroi latérale commune à deux cases adjacentes d'une installation selon l'invention, ladite paroi comportant un moyen de verrouillage en position verrouillée du mécanisme de porte de chacune desdites cases,
la Fig. 3 est une vue en coupe selon le plan 111-111 de la Fig. 2 dudit moyen de verrouillage selon l'invention, ledit moyen étant représenté en position de non verrouillage,
la Fig. 4 est une vue de dessus de la partie supérieure d'un support pour ledit moyen de verrouillage selon l'invention,
la Fig. 5 est une vue de dessus de la partie inférieure dudit support, et
la Fig. 6 est une vue de dessus de trois cases adjacentes d'une installation selon l'invention appartenant à une même rangée.

Pour la description suivante d'un exemple de réalisation d'un mécanisme de porte de case selon l'invention, on emploiera des références chiffrées augmentées de 100 par rapport à celles utilisées pour les éléments qui figurent déjà dans le mode précédemment décrit et qui remplissent des fonctions analogues.

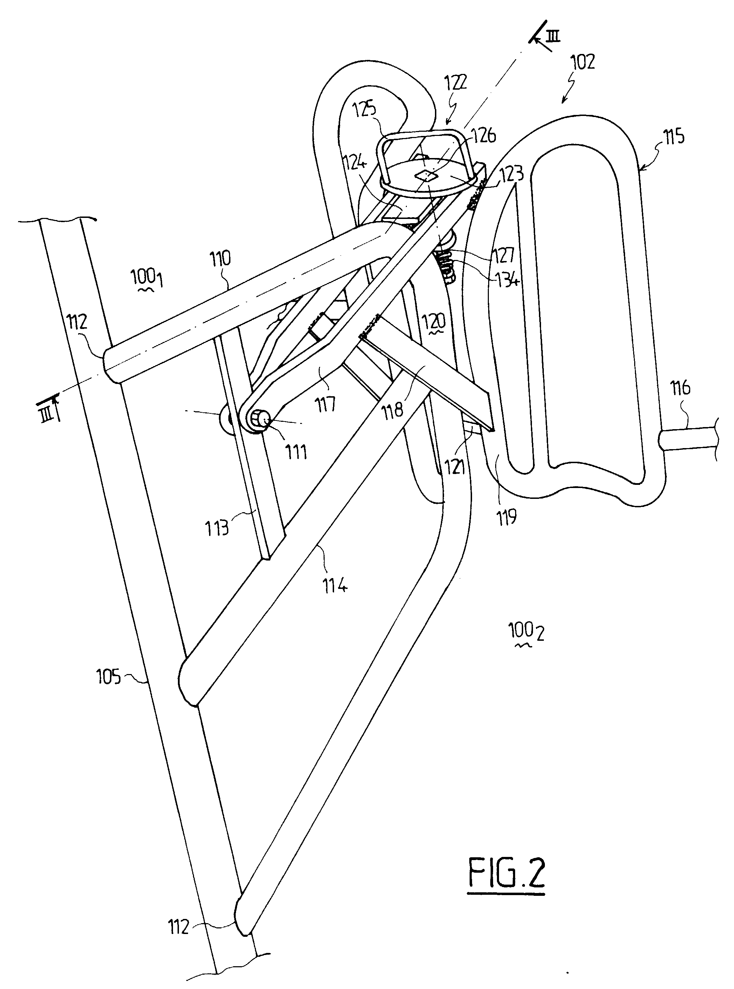

Les deux mécanismes de porte 102 représentés partiellement à la Fig. 2 sont séparés par un arceau 110 formant un panneau latéral commun à deux cases 100₁ et 100₂ adjacentes. Ces mécanismes 102 sont montés sur ledit arceau 110 par l'intermédiaire de 1"un de leurs bras 117 respectifs.

Chaque arceau 110 d'une case 100₁ et 100₂ selon l'invention se distingue de l'arceau 110 représenté à la Fig. 1 en ce qu'il comporte un moyen de verrouillage 122 des mécanismes de porte 102 desdites cases 100₁ et 100₂ en position de fermeture (voir Fig. 2).

Dans cet exemple de réalisation, le moyen de verrouillage 122 est monté sur l'arceau 110, et il est prévu pour empêcher le pivotement, en direction de la position de fermeture de la Fig. 1, du bras 117 monté pivotant sur l'arceau 110 commun auxdites cases 100₁ et 100₂.

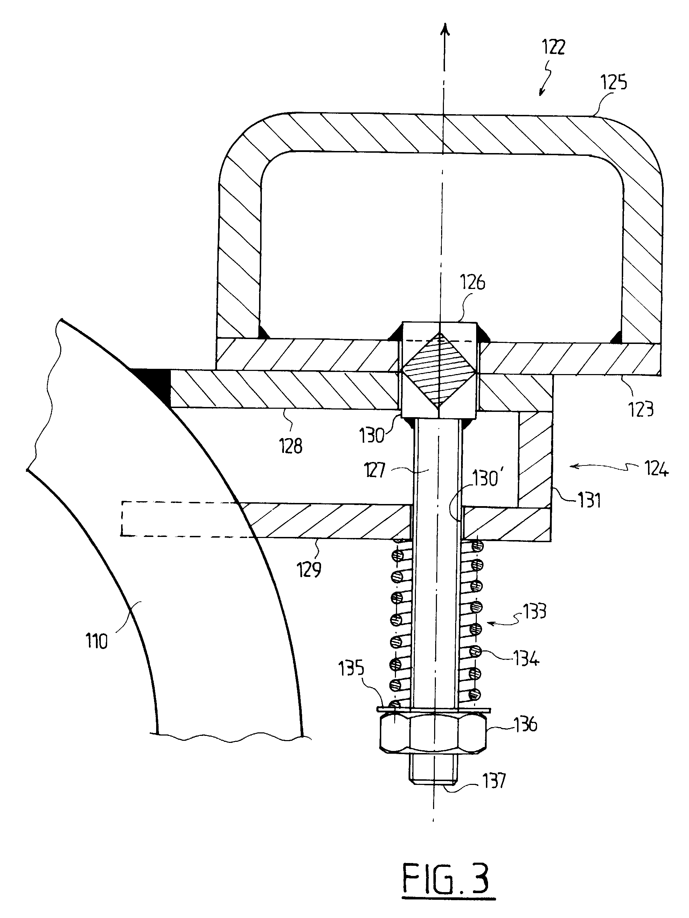

Comme on peut le voir à la Fig. 3, chaque moyen 122 est essentiellement constitué d'une embase 123 de forme oblongue qui est montée de manière mobile sur un support 124, lequel est soudé parallèlement aux bras 117 (non représentés) sur l'extrémité arrière 120 de chaque arceau 110.

Une poignée 125, qui est par exemple constituée d'une tube coudé en U soudé par ses extrémités sur l'embase 123, est prévue pour faire tourner cette dernière au-dessus dudit support 124.

L'embase 123 est pourvue en son centre d'une patte 126 de section carrée, qui est par exemple soudée sur la face de ladite embase 123 qui est en regard de la poignée 125. Une tige filetée 127 est soudée sur la base de la patte 126 qui est en regard de l'autre face de l'embase 123.

Le support 124 est constitué, d'une part, d'une première plaque 128 soudée sur l'arrière 120 de l'arceau 110 et, d'autre part, d'une seconde plaque 129 soudée sur ledit arceau 110 en dessous de la première et parallèlement à celle-ci. Dans l'exemple de la Fig. 3, le support 124 est soudé sur le coude supérieur de l'arceau 110.

La première plaque 128 est plane, et elle est prévue pour pouvoir supporter l'embase 123. De plus, elle est soudée sur l'arceau 110 de telle manière que ladite embase 123 puisse être montée sur ladite plaque 128 au-dessus des deux bras 117 qui lui sont adjacents. La largeur de l'embase 123 est telle qu'elle ne surplombe pas lesdits bras 117 dans la position de non verrouillage de la Fig. 3, où ladite embase 123 repose sur la plaque 128 dans le plan de l'arceau 110. Par contre, la longueur de l'embase 123 est telle qu'elle surplombe lesdits bras 117 qui lui sont adjacents dans la position de verrouillage de la Fig. 2, où ladite embase 123 repose sur la plaque 128 en surplombant les bras 117 d'une manière transversale par rapport à l'arceau 110.

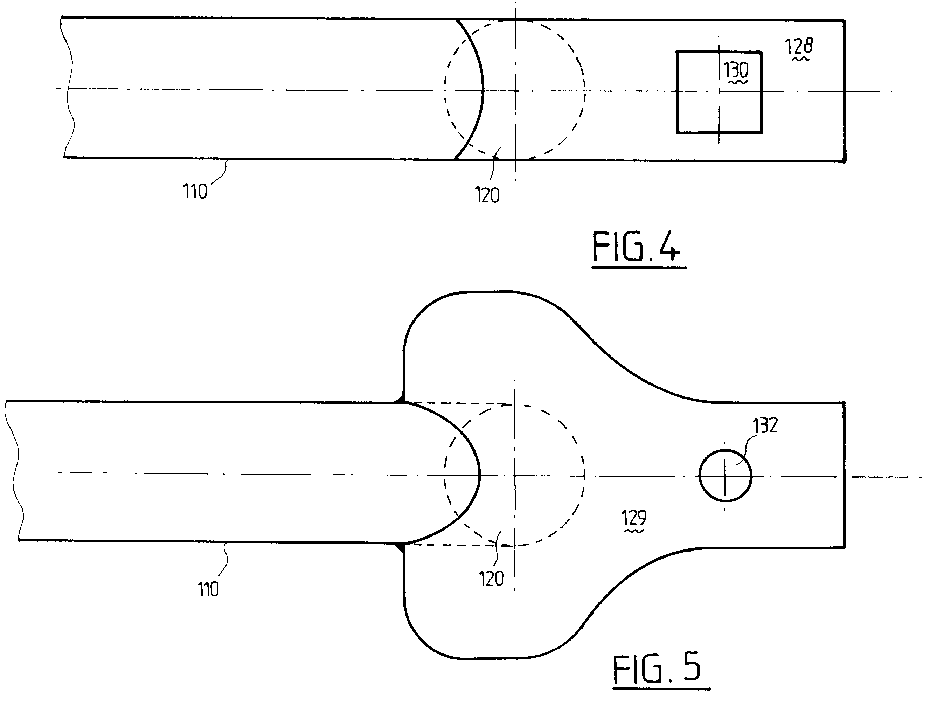

Comme on peut le voir sur la vue de dessus de la Fig. 4, la première plaque 128 présente une forme générale rectangulaire et elle comporte un orifice 130 de section carrée, prévu pour permettre le passage de la patte 126 avec jeu.

La seconde plaque 129 est également plane, et elle est prévue pour supporter la première plaque 128 par l'intermédiaire d'un tronçon 131 la reliant perpendiculairement à ladite première plaque 128, de telle sorte que le support 124 présente une forme de U (voir Fig. 3) dont les ailes sont respectivement constituées par les plaques 128 et 129. Comme on peut le voir sur la vue de dessus de la Fig. 5, la seconde plaque 129 présente un élargissement de sa largeur autour de son lieu de soudure sur l'arceau 110. De plus, elle comporte un orifice 130', par exemple de section circulaire, qui est prévu pour être traversé avec jeu par la tige filetée 127. L'orifice 130' est pratiqué de telle manière qu'il soit centré sur l'orifice 130 qui lui fait face, suite au soudage du support 124 sur l'arceau 110.

La patte 126 qui est montée à travers la première plaque 128 du support 124 est prévue pour empêcher pratiquement toute rotation de l'embase 123 sur ledit support 124, du fait du blocage en rotation de ladite patte 126 de Section carrée par l'orifice 130 qui la reçoit, lequel est également de section carrée.

La tige filetée 127, qui est montée à travers la seconde plaque 129 du support 124, est pourvue d'un moyen 133 prévu pour rappeler la patte 126 de ladite tige 127 dans ledit orifice supérieur 130. Le moyen de rappel 133 est par exemple constitué d'un ressort 134 à compression qui est monté sur la tige filetée 127 en prenant appui, d'une part, sous la seconde plaque 129 du support 124 et, d'autre part, sur une rondelle 135 qui est montée sur un écrou 136 vissé à proximité de l'extrémité libre 137 de la tige 127. L'écrou 136 comporte avantageusement un moyen de freinage pour l'immobiliser dans une position donnée sur la tige 127.

Le ressort 134 est prévu pour exercer une force de rappel en direction de la rondelle 135 lors de sa compression. Cette force tend à augmenter la distance entre la rondelle 135 et le support 124 sur lesquels appuie le ressort 134, de sorte qu'elle rappelle la tige 127 et l'embase 123 qui lui est solidaire sur ledit support 124.

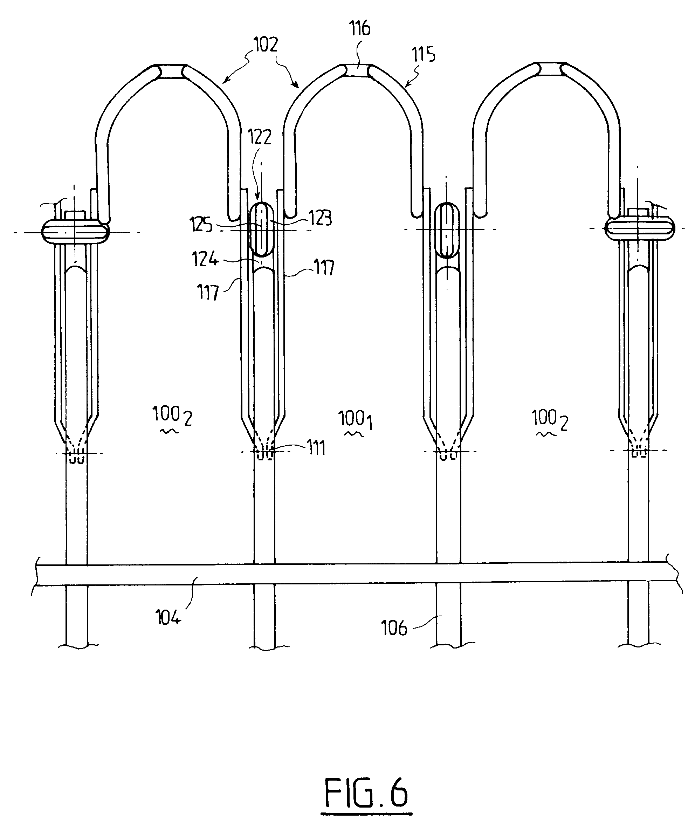

On a représenté à la Fig. 6 trois cases 100₁ et 100₂ d'une même rangée, qui sont telles que les deux panneaux latéraux de la case centrale 100₁ font respectivement office de panneaux latéraux communs pour les deux cases extrêmes 100₂ qui lui sont adjacentes. On a représenté pour chaque case 100₁ ou 100₂ le moyen de verrouillage 122 qui est monté sur chacun de ses panneaux latéraux via chaque arceau 110.

Lorsque l'éleveur souhaite verrouiller le mécanisme de porte 102 d'une case 100₁ ou 100₂ en position de fermeture, après avoir enfermé une truie dans celle-ci via le basculement vers le bas dudit mécanisme 102 (voir flèche A à la Fig. 1), il procède de la manière suivante.

Il soulève d'abord la poignée 125 de l'un des moyens de verrouillage 122 de ladite case 100₁ ou 100₂ (voir la flèche C à la Fig. 3), de manière à dégager la patte 126 de l'orifice supérieur 130 du support 124. Il manoeuvre alors ladite poignée 125 en rotation, tout en maintenant celle-ci en position soulevée de manière que la patte 126 demeure au-dessus dudit orifice 130. Comme on peut le voir aux Figs. 2 et 6, une rotation de l'embase 123 selon un angle d'environ 90° permet de la faire passer de sa position non verrouillée de la Fig. 3, où elle est ne surplombe pas les bras 117, à sa position verrouillée de la Fig. 6 où elle vient buter contre lesdits bras 117 en les surplombant d'une manière transversale.

L'éleveur cesse alors d'exercer une traction sur la poignée 125, ce qui a pour effet de ramener l'embase 123 sur le support 124, du fait de la force de rappel descendante exercée par le ressort 134 sur ladite embase 123. Dans cette dernière position, l'embase 123 constitue une butée haute pour les deux bras 117 montés sur l'arceau de séparation 110, de telle sorte que les deux mécanismes de porte 102 qui sont montés de manière adjacente sur l'arceau 110 sont verrouillés en position de fermeture.

On notera que les formes précitées de l'orifice 130 et de la patte 126 permettent de maintenir l'embase 123 dans cette position de verrouillage.

On notera également que le support 124 permet de guider la tige 127 et la patte 126 en translation verticale, de telle manière que cette dernière puisse être extraite de l'orifice 130 dudit support 124.

Comme cela est visible à la Fig. 6, on notera qu'il est possible de verrouiller ainsi les mécanismes de porte 102 de deux cases 100₂ de part et d'autre d'une case centrale 100₁, laquelle peut conserver son mécanisme 102 en position déverrouillée. Pour ce faire, l'éleveur doit actionner le moyen de verrouillage 122 de chaque case extrême 100₂ qui n'est pas adjacent à ladite case centrale 100₁.

Inversement, lorsque l'éleveur souhaite déverrouiller de sa position de fermeture le mécanisme de porte 102 d'une case 100₂, afin de pouvoir le faire pivoter par la suite en position d'ouverture, il procède de la manière suivante.

Il soulève d'abord l'embase 123 de l'un des moyens de verrouillage 122 de ladite case 100₂ via la poignée 125 correspondante, puis manoeuvre celle-ci en rotation de 90°, de telle manière que l'embase 123 ne surplombe plus les bras 117 qui lui sont adjacents. Lorsqu'il relâche la traction verticale sur la poignée 125 de l'embase 123, celle-ci est ramenée sur le support 124 grâce au moyen de rappel 133. Dans cette dernière position, l'embase 123 est située dans l'axe longitudinal de la case 100₂ et elle permet l'actionnement en position d'ouverture de l'un ou des deux mécanismes de porte 102 qui lui sont adjacents, selon que l'un des deux moyens de verrouillage 122 qui sont adjacents dans la rangée de cases 100₁ et 100₂se trouve en position de verrouillage ou pas, respectivement.

On notera que les moyens de verrouillage 122 de mécanismes de porte 102 selon l'invention sont facilement manoeuvrables dans une installation de cases 100₁ et 100₂, du fait du moyen de rappel 133 qui est compris dans chacun d'eux, notamment. Quant à la tige filetée 127, elle permet de comprimer plus ou moins le moyen de rappel 134 via le vissage de l'écrou 136 sur ladite tige 127.

De plus, ces moyens de verrouillage 122 sont tels qu'ils ne peuvent pas être déverrouillés ou verrouillés accidentellement, du fait du blocage en rotation entre la patte 126 et l'orifice 130 qui est prévu pour la recevoir.

On notera également que lesdits moyens de verrouillage 122 sont montés sur les cases 100₁ et 100₂ de telle manière qu'ils ne sont pas susceptibles de blesser ou d'incommoder les animaux logés dans lesdites cases 100₁ et 100₂.

On notera en outre qu'une case 100₁ ou 100₂ d'une installation selon l'invention ne se limite pas à l'exemple de réalisation qui vient d'être décrit, mais qu'elle pourrait par exemple comporter un seul moyen de verrouillage 122 sur l'une de ses parois latérales de séparation 110, de telle sorte qu'une rangée de cases 100₁ et 100₂ comporte des parois latérales 110 pourvues en alternance dudit moyen 122.

## Revendications

1. Installation de cases adjacentes (100₁ et 100₂) pour animaux, notamment de cases gestantes d'une porcherie, du type où chaque case (100₁ ou 100₂) comporte un mécanisme de porte (102) prévu pour pouvoir occuper une position de fermeture de manière à empêcher la sortie de l'animal de ladite case (100₁ ou 100₂), deux cases adjacentes (100₁ et 100₂) étant séparées par une paroi latérale commune (106, 110), caractérisée en ce que chaque paroi latérale commune (106, 110) est pourvue d'un moyen (123) pour verrouiller dans ladite position de fermeture les mécanismes de porte (102) desdites deux cases adjacentes (100₁ et 100₂) à ladite paroi (106, 110).

2. Installation de cases adjacentes (100₁ et 100₂) pour animaux selon la revendication 1, du type où chaque mécanisme de porte (102) est prévu pour pouvoir pivoter autour d'un axe transversal (111) par rapport à la case (100₁ ou 100₂) sur laquelle il est monté, caractérisée en ce que chaque moyen de verrouillage (123) est prévu pour pouvoir occuper une position de verrouillage où il empêche simultanément le pivotement autour dudit axe (111) desdits deux mécanismes de porte (102) adjacents à la paroi commune (106, 110).

3. Installation de cases adjacentes (100₁ et 100₂) pour animaux selon la revendication 2, du type où lesdits deux mécanismes de porte (102) sont respectivement montés sur ladite paroi commune (106, 110) par l'intermédiaire de bras (117) montés de part et d'autre de ladite paroi (106, 110) de manière à être solidaires dudit axe de pivotement (111), les bras (117) étant prévus pour faire passer chaque mécanisme de porte (102) de ladite position de fermeture à une position d'ouverture en pivotant vers le haut autour dudit axe (111), caractérisée en ce que chaque moyen de verrouillage (123) est monté de manière mobile en rotation sur un support (124) solidaire de l'extrémité (110) de ladite paroi commune (106, 110) qui est adjacente auxdits mécanismes de porte (102), de manière à pouvoir occuper, d'une part, une position de verrouillage où il bute sensiblement transversalement par rapport à ladite paroi (106, 110) contre lesdits bras (117) qui lui sont adjacents en les surplombant et, d'autre part, une position de déverrouillage où il est sensiblement positionné dans le plan de ladite paroi (106, 110) de sorte à autoriser le pivotement vers le haut desdits bras (117).

4. Instaliation de cases adjacentes (100₁ et 100₂) pour animaux selon la revendication 3, caractérisée en ce que chaque moyen de verrouillage (123) comporte en son centre un organe (126) pour le bloquer en rotation sur ledit support (124).

5. Installation de cases adjacentes (100₁ et 100₂) pour animaux selon la revendication 4, caractérisée en ce que ledit organe (126) est constitué d'une patte de section carrée, laquelle est prévue pour traverser avec jeu un premier orifice (130) de section carrée qui est pratiqué sur une plaque supérieure (128) dudit support (124).

6. Installation de cases adjacentes (100₁ et 100₂) pour animaux selon la revendication 5, caractérisée en ce qu'une tige (127) est montée solidaire dudit organe de blocage (126) de manière normale par rapport au plan contenant ledit moyen de verrouillage (123), ladite tige (127) étant prévue pour traverser avec jeu un second orifice (130') qui est pratiqué sur une plaque inférieure (129) dudit support (124), de telle manière que ledit organe de blocage (126) puisse être extrait du support (124) par le guidage en translation de ladite tige (127) au travers dudit support (124).

7. Installation de cases adjacentes (100₁ et 100₂) pour animaux selon la revendication 6, caractérisée en ce que chaque moyen de verrouillage (123) est pourvu d'une poignée (125) sur sa face opposée à ladite tige (127).

8. Installation de cases adjacentes (100₁ et 100₂) pour animaux selon la revendication 7, caractérisée en ce que chaque moyen de verrouillage (123) est pourvu d'un moyen (133) pour rappeler ladite patte (126) dans ledit orifice supérieur (130).

9. Installation de cases adjacentes (100₁ et 100₂) pour animaux selon la revendication 8, caractérisée en ce que ledit moyen de rappel (133) est constitué d'un ressort à compression (134) qui est prévu pour prendre appui, d'une part, sous ladite plaque inférieure (129) du support (124) et, d'autre part, sur une butée basse (135, 136) dont est pourvue ladite tige (127).
